# EUROPEAN PATENT SPECIFICATION

(11) **EP 0 899 563 B1**
(45) Date of publication and mention of the grant of the patent: **07.02.2001**
(21) Application number: 98830436.6
(22) Date of filing: 17.07.1998
(51) Int. Cl.: G01N 27/407

(54) **"Gas sensor"**
Gas Sensor
Capteur de gaz

(30) Priority: 01.08.1997 IT TO970701
(43) Date of publication of application: 03.03.1999
(73) Proprietor: C.R.F. Società Consortile per Azioni, 10043 Orbassano (TO) (IT); ASSOCIATION POUR LA RECHERCHE ET LE DEVELOPPEMENT DES METHODES ET PROCESSUS INDUSTRIELS (ARMINES), F-75272 Paris Cédex 06 (FR); Societe' CORRECI s.a., Compagnie de regulation et de controle industriel, 69355 Lyon Cédex (FR); Trinity College of Dublin, Dublin 2 (IE); POLITECNICO DI TORINO, 10129 Torino (IT)
(72) Inventor: Pupier, Christophe, 75272 Paris (FR); Cusin, Nicolas, 69355 Lyon Cédex (FR); Fitzpatrick, John, Dublin 2 (IE); Strazzulla, Patrick, Dublin 2 (IE); Malvicino, Carloandrea, 10043 Orbassano (Torino) (IT); Lalauze, René, 75272 Paris (FR); Pijolat, Christophe, 75272 Paris (FR); Testud, Christine, 75272 Paris (FR); Negro, Alfredo, 10129 Torino (IT); Montanaro, Laura, 10129 Torino (IT); Marchand, Jean Claude, 75272 Paris Cedex 06 (FR)
(74) Representative: Buzzi, Franco

(56) References cited:
- EP-A- 0 059 636
- EP-A- 0 779 426
- JP-A- 8 220 059

## Description

The present invention is generally related to sensors for determining the concentration of polluting gaseous mixtures, particularly (though not exclusively) as far as application to exhaust gases of motor vehicle engines is concerned.

Emission of pollutants produced by these engines and fuel consumption thereof shall both have to be hugely reduced within the next years owing to introduction of more and more strict rules. These objects may be achieved through development of new fuel supply systems and new polluting emission reducing systems.

A solution to the required rules is represented by the provision of direct injection diesel supply systems, coupled with oxidizer catalytic exhaust apparatuses intended to reduce nitrogen oxides.

A further adjustment which shall have to be optimized within the frame of motor vehicle internal combustion engines resides in the management of the EGR (Exhaust Gas Recirculation) and of the injection timing, according to a closed loop so has to reduce nitrogen oxides and the particulate, respectively. Moreover use of oxidizer catalysts is also contemplated, which shall have to be operated under the highest efficiency conditions.

Determining the composition of the exhaust gases and thus the presence and concentration therein of the main polluting components (CO, HC, Noₓ) constitutes one strategically relevant item in connection with future technologies for emission reduction. For instance in the field of diesel engines measuring the concentration of Noₓ and HC would enable optimizing operation of DeNOₓ catalysts as well as optimized management of the EGR.

According to the prior art, the only automotive chemical sensors available on the market are the oxygen sensors of the on/off type (lambda probe) or of the proportional type, both based upon the electro-chemical properties of zirconium oxide (ZrO₂).

More recently gas sensors for selective measurement of different pollutants have been proposed as industrial prototypes, which are still based on the properties of the zirconium oxide, or upon the electro-chemical properties of other metal oxides, and more particularly of β - Al₂O₃. The latter sensors comprise a solid electrolyte consisting of β - alumina upon which two electrodes are arranged, normally made one of gold and the other of platinum, intended to be exposed to the gas, and measurement means to measure the electromotive force between these two electrodes and to determine, as a function of the measured electromotive force, the concentration of pollutants such as CO, HC, Noₓ within the gas.

Examples of gas sensors of the above-referenced type are disclosed and illustrated, for instance, in GB-A-2.119.933 and FR-B-9207414. The latter document discloses the solid electrolyte undergoing an irreversible treatment by holding it at 600°C for two hours in an atmosphere containing approximately 1% SO₂, so has to improve the sensor response to the presence of carbon monoxide and sulphur dioxide.

From GB-A-2.119.933 it also known that the response of these β - alumina sensors with respect to the pollutants is variable, in terms of higher or lower sensitivity, as a function of the temperature thereof. It has been discovered that these gas sensors are more sensitive to nitrogen oxides at lower temperatures, while at higher temperatures they are more sensitive to reducing compounds such as HC and CO. From US-A-5.656.190 a temperature regulation system for a solid electrolyte-based sensor is generally known.

The object of the present invention is to provide a gas sensor of the type set forth at the beginning which, taking advantage of the above response variability as a function of the temperature, can be conveniently employed in a practical and reliable way, and at relatively low cost, to be directly applied to exhaust apparatuses of motor vehicle engines, so as to optimize operation thereof and reduce pollutant emissions.

According to the invention, this object is achieved primarily by a gas sensor provided with the features set forth in claim 1. A method making use of such a gas sensor is also recited in claim 8.

The thermoregulation system conveniently comprises heating resistor means and control resistor means, both applied by screen printing onto one face of a ceramic substrate on the opposite face of which β - alumina is deposited also by screen printing.

The thermoregulation system is normally designed to adjust the sensor temperature between a minimum value of about 300°C, at which the sensor is more sensitive to nitrogen oxides, and a maximum value of about 700°C and up to 900°C, at which the sensor is more sensitive to reducing compounds such as HC and CO.

The invention will now be disclosed in detail with reference to the accompanying drawings, purely provided by way of non limiting example, in which:
- figure **1** is a diagrammatic representation of one embodiment of a gas sensor according to the invention, and
- figures **2** through 6 are graphs showing the response of the gas sensor according to figure 1 under different operating temperature.

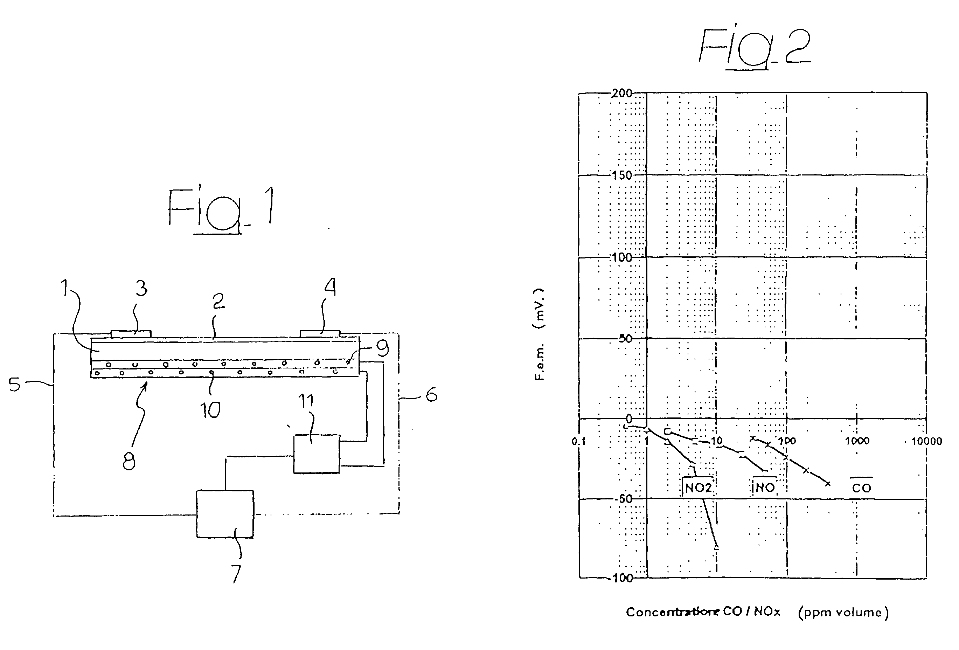

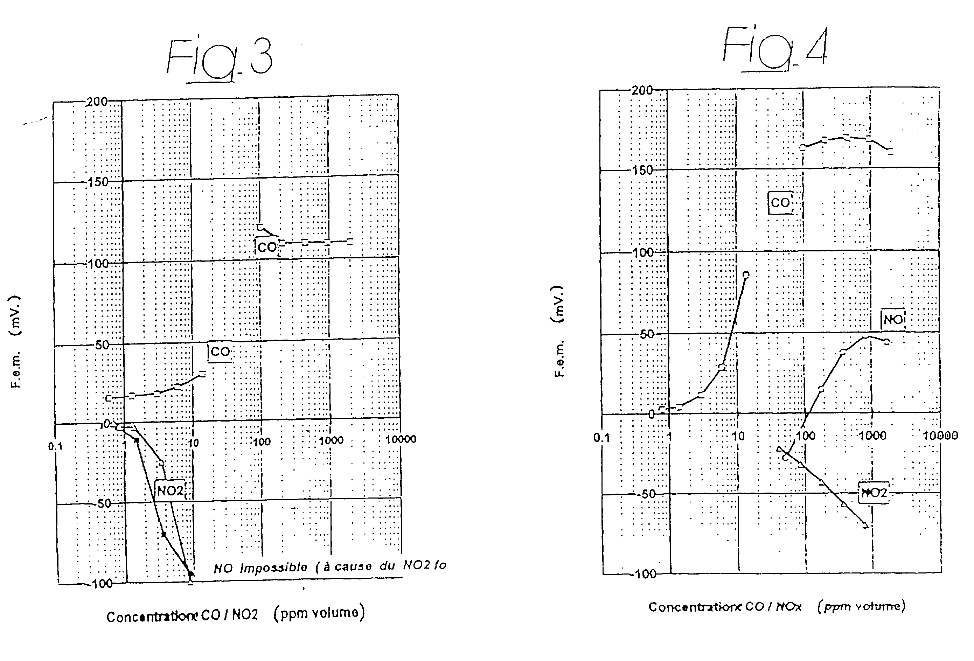

In accordance with the exemplary embodiment shown in figure 1, a gas sensor according to the invention essentially comprises a ceramic substrate 1 on one face of which a solid electrolyte 2 is applied by screen printing, which is formed by β - alumina for instance produced via "solgel" additioned with silica - alumina glass and sodium oxide, and subsequently thermally processed so as to perform anchoring thereof onto the substrate 1.
A platinum electrode 3 and a gold electrode 4 are arranged in contact with the solid electrolyte 2 and are connected, through respective wires 5, 6, to a measurement instrument 7, for instance a millivoltmeter, provided to measure the electromotive force between the electrodes 3 and 4.
According to the invention, the gas sensor further embodies a thermoregulation system provided to vary the temperature thereof selectively and in a controlled way.
This thermoregulation system, generally designated as 8, includes a heating resistor 9, applied also by screen printing onto the face of the substrate 1 opposite to the solid electrolyte 2, with the interposition of a layer of an inert or electrically insulating material, and a control resistor 9, applied also by screen printing in proximity to the heating resistor 9.
It is important that the heating resistor 9 be electrically insulated relative to the solid electrolyte 2, so has to prevent electrical interferences.
The measurement instrument 7 and the resistors 9, 10 are connected to an electronic control unit 11, through which the heating resistor 9 is supplied with alternate current.
The sensitive member of the sensor may be incorporated within a protection body arranged to be fitted in a probe-like fashion for instance into an exhaust apparatus of a motor vehicle combustion engine, so that it is exposed to the exhaust gases. In operation, the voltage measured between the two electrodes 3, 4 by the measurement instrument 7 is indicative of the concentration of the polluting substances (Noₓ, HC, CO).
The diagrams shown in figures 2 through 6 depict how the sensitivity and thus the response of the gas sensor with respect to one or the other pollutants varies as a function of the temperature.
Figure 2 shows the response of the sensor at a temperature around 300°C: it can be noticed a high sensitivity with respect to nitrogen oxides, particularly to nitrogen dioxide (NO₂). The signal is negative with respect to the signal corresponding to the environmental air.

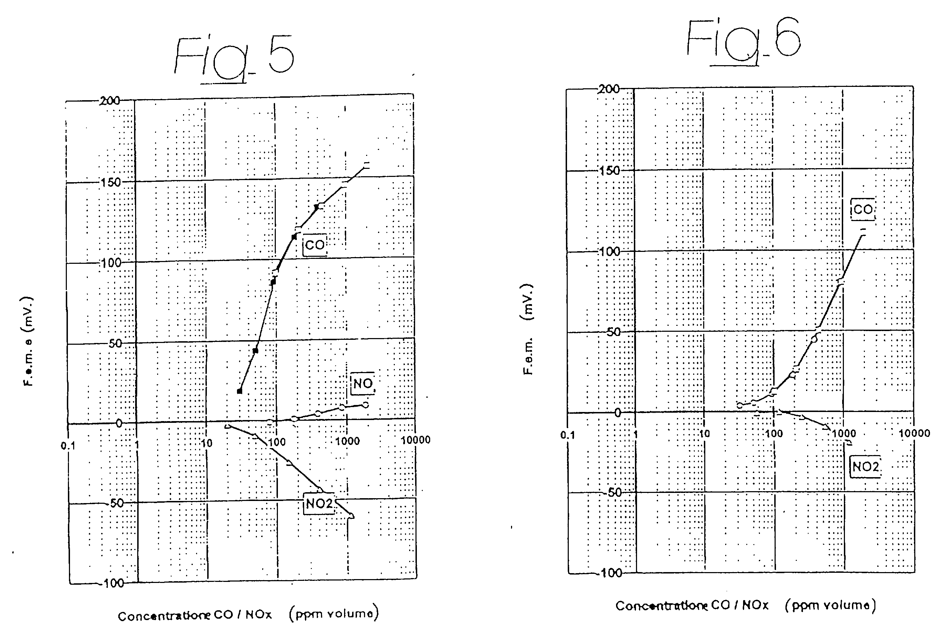

Figure 3 shows the response at a temperature around 400°C: the sensor is still remarkably sensitive to nitrogen dioxide and to nitric oxide; in presence of CO (oxidizing) the signal becomes positive.
Figure 4 shows the response at a temperature around 500°C: sensitivity with respect to nitrogen oxides decreases remarkably, while sensitivity to CO increases. The signal in presence both of CO and NO₂ is positive.
Figure 5 shows the response at a temperature around 600°C: sensitivity with respect to nitrogen oxides is still reducing, while sensitivity to CO still increases.
Lastly figure 6 shows the response at a temperature around 700°C: the sensor is practically only sensitive to CO (as well as to HC), while a weak sensitivity to NO₂ still persists.

Accordingly, the thermoregulation system 8 of the gas sensor in accordance to the invention is arranged, by means of the electronic control unit 11, to vary selectively and in a controlled way, during operation, the temperature of the solid electrolyte 2 between a minimum value of about 300°C and a maximum value of about 700°C and more, for instance up to 900°C. In accordance to the above, at the lowermost temperature value the sensor response shall be more efficient and precise with respect to the nitrogen oxides, while at the uppermost temperature value the same result shall be achieved with respect to CO (and HC ).

In summary, the gas sensor according to the invention enables to appreciably enhance the measurement precision of the exhaust gases composition of a motor vehicle engine, and thus of the presence and concentration of the main pollutants, which results into a remarkably higher efficiency of the devices provided for reducing these polluting agents (oxidizer catalysts etc) designed to be operatively connected to the sensor.
Naturally the details of construction and the embodiments may be widely varied with respect to what has been disclosed and illustrated, without thereby departing from the scope of the present invention, such as defined in the appended claims.
Thus, while the thermoregulation system disclosed in the case of the shown example is designed to selectively vary the sensor temperature between two utmost values, it is to be pointed out that within the frame of the invention an arrangement may be contemplated according to which the thermoregulation system is arranged to constantly keep the sensor at one of these temperatures. In this case a second almost identical sensor may be provided, whose thermoregulation system shall be designed to constantly keep the temperature thereof at the other value, and possibly even a third identical sensor may be provided whose thermoregulation system shall be designed for instance to constantly keep the temperature thereof at an intermediate value. In alternative a single multi-element sensor may be envisaged, formed by a battery of solid electrolyte sensitive elements arranged onto a common substrate and connected to a single electronic control unit for the electrical supply and for processing the signals provided by the different sensitive elements.
Moreover the solid electrolyte may also consist of alumina in a different crystalline phase, and the related electrodes may also be made of materials which are different than those disclosed in the above.
Lastly the solid electrolyte 2 and related electrodes 3, 4 may also be covered by a porous layer material (ceramic or metallic) providing both a mechanical protection and a chemical filtering function.

## Claims

1. Gas sensor comprising a solid electrolyte (2), preferably consisting of β - alumina, upon which two electrodes (3, 4) are arranged, preferably made one of gold and the other of platinum, to be exposed to the gas, and measurement means (7) to measure the electromotive force between said two electrodes (3, 4) and determine, as a function of the measured electromotive force, the concentration or pollutants such as CO, HC, NOₓ within said gas, the response of said sensor with respect to said pollutants being variable as a function of the temperature, characterized in that it is provided with a thermoregulation system (8) designed to vary selectively and in a controlled way the temperature of said solid electrolyte (2) from a lowermost value around 300°C, to at least an intermediate value comprised between 500° and 700°, and up to an uppermost value around 900°C so as to selectively change sensitivity and thus the response of said gas sensor to CO, HC, Noₓ, respectively.

2. Gas sensor according to claim 1, characterized in that said thermoregulation system (8) comprises heating resistor means (8) and control resistor means (10).

3. Gas sensor according to claim 2, characterized in that said solid electrolyte (2) is formed by screen printing onto one face of a ceramic substrate (1), and said heating resistor (9) and said control resistor (10) are applied also by screen printing onto the opposite face of said ceramic substrate (1).

4. Gas sensor according to claim 4, characterized in that said heating resistor (9) is supplied with alternate current.

5. Gas sensor according to claim 2 or claim 4, characterized in that said heating resistor (9) is electrically insulated with respect to said solid electrolyte (2).

6. Gas sensor according to any of the preceding claims, characterized in that the solid electrolyte (2) and related electrodes (3, 4) are covered by a porous material layer having both mechanical protection and chemical filtering functions.

7. A method to determine the concentration in a gas or polluting substances including CO, HC, Noₓ, said method comprising the steps of:
- providing a gas sensor comprising a solid electrolyte (2) consisting of β-alumina and upon which two electrodes (3, 4) are arranged, made one of gold and the other of platinum, said sensor having a thermoregulation system (8),
- exposing said sensor electrodes to said gas,
- varying selectively and in a controlled way the temperature of said solid electrolyte (2) from a lowermost value around 300°C, to at least an intermediate value comprised between 500° and 700°, and up to an uppermost value around 900°C so as to selectively change the sensitivity and thus the response of said gas sensor to CO, HC, Noₓ, respectively,
- measuring the electromotive force between said two electrodes (3, 4) at each of said temperature values and determining, as a function of the measured electromotive force, the concentration within said gas of CO, HC, NOₓ, respectively.

## Patentansprüche

1. Gassensor umfassend,
einen festen, vorzugsweise aus β-Aluminiumoxid bestehenden Elektrolyten (2), auf welchem zwei Elektroden (3, 4) angeordnet sind, von denen eine vorzugsweise aus Gold und die andere aus Platin hergestellt wird, um dem Gas ausgesetzt zu werden, und
Erfassungsmittel (7) zum Messen der elektromotorischen Kraft zwischen den beiden Elektroden (3, 4), und zur Bestimmung der Konzentration von Schadstoffen, wie CO, HC und NOₓ in dem Gas als eine Funktion der gemessenen elektromotorischen Kraft, wobei die Antwort des Sensors in Bezug auf die Schadstoffe als eine Funktion der Temperatur veränderlich ist, dadurch gekennzeichnet, dass er mit einem Thermoregulierungssystem (8) bereit gestellt wird, welches die Temperatur des festen Elektrolyten (2) selektiv und kontrolliert von einem untersten Wert um 300°C bis mindestens zu einem zwischen 500°C und 700°C liegenden Zwischenwert und bis zu einem obersten Wert um 900°C variieren soll, um die Empfindlichkeit und entsprechend damit die Antwort des Gassensors bezüglich CO, HC und NOₓ selektiv zu verändern.

2. Gassensor nach Anspruch 1, dadurch gekennzeichnet, dass das Thermoregulierungssystem (8) Heizwiderstandsmittel (9) und Steuerwiderstandsmittel (10) umfasst.

3. Gassensor nach Anspruch 2, dadurch gekennzeichnet, dass der feste Elektrolyt (2) auf einer Seite eines keramischen Substrats (1) durch Siebdruck gebildet wird, und der Heizwiderstand (9) und der Steuerwiderstand (10) auf der anderen entgegengesetzten Seite des keramischen Substrats (1) ebenfalls durch Siebdruck angebracht werden.

4. Gassensor nach Anspruch 3, dadurch gekennzeichnet, dass der Heizwiderstand (9) mit Wechselstrom versorgt wird.

5. Gassensor nach Anspruch 2 oder 3, dadurch gekennzeichnet, dass der Heizwiderstand (9) in Bezug auf den festen Elektrolyten (2) elektrisch isoliert ist.

6. Gassensor nach einem der vorstehenden Ansprüche, dadurch gekennzeichnet, dass der feste Elektrolyt (2) und die betreffenden Elektroden (3, 4) mit einer porösen Materialschicht bedeckt sind, welche sowohl eine mechanische Schutzfunktion als auch eine chemische Filterfunktion aufweist.

7. Verfahren zum Bestimmen der Konzentration an CO, HC und NOₓ einschließenden Schadstoffen in einem Gas, wobei das Verfahren die Schritte umfasst:
- Bereitstellen eines Gassensors, welcher einen festen, aus β- Aluminiumoxid bestehenden Elektrolyten (2) umfasst, und auf welchem zwei Elektroden (3,4) angebracht sind, von denen eine aus Gold und die andere aus Platin hergestellt wird, wobei der Gassensor ein Thermoregulierungssystem (8) aufweist.
- Aussetzen der Gassensorelektroden dem Gas,
- selektives und kontrolliertes Variieren der Temperatur des festen Elektrolyten (2) von einem untersten Wert um 300°C bis mindestens zu einem zwischen 500°C und 700°C liegenden Zwischenwert und bis zu einem obersten Wert um 900°C, um die Empfindlichkeit und entsprechend damit die Antwort des Gassensors bezüglich CO, HC, NOₓ selektiv zu verändern,
- Erfassen der elektromotorischen Kraft zwischen den zwei Elektroden (3, 4) bei jedem der Temperaturwerte und Bestimmen der Konzentration an CO, HC und NOₓ innerhalb des Gases als eine Funktion der gemessenen elektromotorischen Kraft.

## Revendications

1. Capteur de gaz comprenant un électrolyte solide (2) consistant de préférence en β - alumine, sur lequel sont agencées deux électrodes (3, 4), de préférence formée l'une d'or et l'autre de platine, à exposer aux gaz, et des moyens de mesure (7) pour mesurer la force électromotrice entre lesdites électrodes (3, 4) et déterminer, en fonction de la force électromotrice mesurée, la concentration des agents polluants tels que Co, HC, NOₓ dans ledit gaz, la réponse dudit capteur par rapport auxdits agents polluants étant variable en fonction de la température, caractérisé en ce qu'il est pourvu d'un système de thermorégulation (8) conçu pour varier sélectivement et d'une manière contrôlée la température dudit électrolyte solide (2) par rapport à une valeur la plus basse autour de 300°C, jusqu'à au moins une valeur intermédiaire comprise entre 500°C et 700°C et jusqu'à une valeur supérieure autour de 900°C, afin de changer sélectivement la sensibilité et ainsi la réponse dudit capteur de gaz à CO, HC, NOₓ, respectivement.

2. Capteur de gaz selon la revendication 1, caractérisé en ce que ledit système de thermorégulation (8) comprend un moyen formant résistance chauffante (8) et un moyen formant résistance de contrôle (10).

3. Capteur de gaz selon la revendication 2, caractérisé en ce que ledit électrolyte solide (2) est formé par impression à l'écran sur une face d'un substrat en céramique (1) et ladite résistance chauffante (9) et ladite résistance de contrôle (10) sont appliquées également par impression à l'écran sur la face opposée dudit substrat en céramique (1).

4. Capteur de gaz selon la revendication 4, caractérisé en ce que ladite résistance chauffante (9) reçoit du courant alternatif.

5. Capteur de gaz selon la revendication 2 ou la revendication 4, caractérisé en ce que ladite résistance chauffante (9) est électriquement isolée par rapport audit électrolyte solide (2).

6. Capteur de gaz selon l'une quelconque des revendications précédentes, caractérisé en ce que l'électrolyte solide (2) et les électrodes en rapport (3, 4) sont couvert d'une couche d'un matériau poreux ayant à la fois des fonctions de protection mécanique et de filtration chimique.

7. Méthode pour déterminer la concentration, dans un gaz, des substances polluantes comprenant CO, HC, NOₓ, ladite méthode comprenant les étapes de :
prévoir un capteur de gaz comprenant un électrolyte solide (2) consistant en β - alumine et sur lequel sont agencées deux électrodes (3, 4), faites l'une d'or et l'autre de platine, ledit capteur ayant un système de thermorégulation (8),
- exposer lesdites électrodes du capteur audit gaz,
- changer sélectivement et d'une manière contrôlée la température dudit électrolyte solide (2) à partir de la valeur la plus basse autour de 300°C jusqu'à au moins une valeur intermédiaire comprise entre 500 et 700°C, et jusqu'à une valeur supérieure autour de 900°C, afin de changer sélectivement la sensibilité et ainsi la réponse du capteur de gaz CO, HC, NOₓ respectivement,
- mesurer la force électromotrice entre lesdites deux électrodes (3, 4) à chacune desdites valeurs de température et déterminer, en fonction de la force électromotrice mesurée, la concentration, dans ledit gaz, en CO, HC, NOₓ respectivement.
